# EUROPEAN PATENT SPECIFICATION

(11) **EP 3 867 841 B1**
(45) Date of publication and mention of the grant of the patent: **13.09.2023**
(21) Application number: 19801968.9
(22) Date of filing: 15.10.2019
(51) Int. Cl.: G06Q 10/06, G06Q 10/08

(54) **SYSTEM FOR CONTROLLING AND MANAGING A PROCESS WITHIN AN ENVIRONMENT USING ARTIFICIAL INTELLIGENCE TECHNIQUES AND RELATIVE METHOD**
SYSTEM ZUR STEUERUNG UND VERWALTUNG EINES PROZESSES IN EINER UMGEBUNG UNTER VERWENDUNG VON TECHNIKEN DER KÜNSTLICHEN INTELLIGENZ UND ENTSPRECHENDES VERFAHREN
SYSTÈME DE COMMANDE ET DE GESTION D'UN PROCESSUS DANS UN ENVIRONNEMENT À L'AIDE DE TECHNIQUES D'INTELLIGENCE ARTIFICIELLE ET PROCÉDÉ RELATIF

(30) Priority: 15.10.2018 IT 201800009442
(43) Date of publication of application: 25.08.2021
(73) Proprietor: Laser Navigation S.r.l., 24054 Calcio (BG) (IT)
(72) Inventor: NAVONI, Roberto, 24054 Calcio, Bergamo (IT)
(74) Representative: Mozzi, Matteo
(86) International application number: PCT/IB2019/058778
(87) International publication number: WO 2020/079587

(56) References cited:
- WO-A1-2018/114443
- US-B1- 9 871 692
- US-B2- 8 036 425

## Description

### . Field of the invention

**.** The present invention relates to the techniques and methods for controlling and managing an environment, in particular, to a system for controlling and managing a process within an environment using artificial intelligence techniques and relative method.

### . Background art

**.** Technological systems or plants are known for controlling and managing a process in an environment.

**.** Such systems have different modes of operation or configuration, depending on the process to be run within the environment.

**.** "Process" within an environment means both a safety management intervention (for example, from the simple sending of an alarm signal to the actual intervention of safety personnel on site) as well as a maintenance intervention (for example, the replacement of one or more faulty lamps in the lighting equipment of an urban or industrial environment).

**.** In other words, the process also depends on the type of environment.

**.** In this regard, "environment" means both large spaces, such as, for example, an industrial warehouse, a construction site, a civil or public housing cluster, a shopping center, an airport, or even smaller spaces such as shops, public premises or a parking lot stall, the inside or outside of a boat, the inside or outside of an oil station. Furthermore, an environment may also be defined as a context which is not merely built but linked to components which are pertinent to the environment itself, for example, the lighting equipment of an urban or industrial environment.

**.** Typically, a perimeter alarm system of the standard type installed in a dwelling or in an industrial warehouse is configured to detect a dangerous situation and to transmit a related alarm signal to a remote surveillance operating center in which an operator, once received the alarm signal, is capable of connecting to the cameras of the perimeter alarm system, verify the event generating the alarm and, once carried out the verification, in the case of a false alarm, close the event while, in the case of a full-blown alarm, contact the police for intervention.

**.** A drawback of this architecture is due to the reaction times, even very slow, and to the fact that verifying whether or not it is a false alarm is often not easy, since many times in such systems false alarms are generated due to vegetation, animals, malfunctioning of system components.

**.** In a banking site security system, instead, the monitoring is conventionally performed by means of robbery alarm buttons (wired or even wireless), present within the banking site itself, which people under threat may press in case of an emergency. Upon pressing of one of these buttons, an alarm signal is activated towards the monitoring center which, by means of environmental cameras present within the security system of the banking site, is capable of understanding the scenario and consequently verifying whether the alarm signal received is an actual real alarm or simply a false alarm.

**.** A drawback of this architecture is still due to the even very slow reaction times and to the low reliability, as a robbery alarm button may be inadvertently pressed, generating unnecessary false alarms.

**.** In an industrial plant or on a construction site, safety control is linked to aspects which are different, but not less important, with respect to the breaking of the law by ill-intentioned parties.

**.** In fact, in an industrial plant or on a construction site, it is essential to monitor the access to certain areas in which, for example, adequate DPI (from the acronym, in Italian, "Dispositive di Protezione Individuals, in English, Personal Protective Equipment, PPE), clothing, and often also adequate training, is required.

**.** Furthermore, monitoring becomes even more critical considering that, within a large industrial plant or construction site, many people, different operating teams which may also belong to third-party companies, may be there at the same time.

**.** Under these conditions, the typical approach is that the safety manager carries out a training for the access to the areas and the supervision on everything proceeding correctly and personnel complying with the rules.

**.** Therefore, a first drawback is related to the considerable waste of energy in managing these processes and to the impossibility of always verifying that everything is carried out correctly and in compliance with the rules.

**.** Furthermore, still in an industrial plant or construction site, another important aspect is, in the case of an evacuation, the identification, on a numerical level, of how many people are in the plant and where they are, in case not all of them have been evacuated, the successful coordination of the evacuation activities is compromised with serious consequences. Nowadays, these requirements have not yet been met in an acceptable manner, since industrial plants, from this point of view, still present several gaps. Current systems, based on badges, RFID or Ultra-Wide Band (UWB) systems to be swiped or read by a collection center, for example, do not take into consideration users who are not collaborative or those who have lost such personal devices.

**.** Instead, in the case of a conventional parking lot, parking stalls are conventionally managed directly by the user who must recover, for a fee, a coupon to be affixed to the dashboard of the car, and the process of checking the regularity thereof is delegated to inspectors, such as the Municipal police or traffic auxiliaries.

**.** In this type of environment, infrastructure costs are obviously there, proportional to the number of payment machines to be installed and due to the number of inspectors to be deployed, especially in the case of very large parking lots.

**.** Instead, in the case of a more technologically advanced parking, i.e., a smart parking, in which appropriate sensors are embedded in the road surface of the stall, a "physical" verification by inspectors is not necessary but it is left to a remote operating center.

**.** However, this architecture still requires infrastructural interventions of a certain importance to allow checking whether the parking has been paid or not.

**.** A final case relates instead to the maintenance of lamps, within the lighting equipment of a lighting installation, found to be defective or faulty.

**.** Conventionally, in usual cases, if public lighting lamps are not remotely controlled, the citizens themselves are those who report the fault to the municipality, which activates a team intervention process.

**.** The limits of such a monitoring have been exceeded by the remote controlled lighting in which an operating center keeps the individual lamps under control by knowing the status thereof.

**.** This last solution, although being efficient, involves considerable costs for the networking of poles which must be equipped with specific hardware and, in most cases, requires the replacement of pre-existing lamps with lamps suitable for this type of remote control, for example, adjustable LEDs.
US 8036425 B2 discloses neural network-controlled automatic tracking and recognizing system and method.
WO 2018/114443 A1 discloses RGBD sensing based object detection system and method thereof.
US 9871692 B1 discloses cooperative monitoring networks.

### . Solution

**.** It is the object of the present invention to provide a system for controlling and managing a process in an environment using artificial intelligence techniques, be it a safety intervention, a preventive assessment intervention or a maintenance intervention, which at least partially allows to remedy the drawbacks complained above with reference to the background art and, in particular, which is more reliable, versatile and flexible, and which is capable of recognizing the risk and the mitigation thereof also by means of the analysis of the historical series of events.

**.** Such an object is achieved by a system according to claim 1.

**.** The present invention also relates to a method for controlling and managing a process in an environment using artificial intelligence techniques.

**.** Some advantageous embodiments are the subject of the dependent claims.

### . Drawings

**.** Further features and advantages of the system and of the relative method in accordance with the invention will become apparent from the following description of preferred embodiments, given by way of an indicative and non-limiting example, with reference to the accompanying drawings, in which:
- Figure 1 shows, by means of a block diagram, a system for controlling and managing a process in an environment using artificial intelligence techniques, in accordance with an embodiment of the invention;
- Figures 2 and 3 show video screens produced by the system for controlling and managing a process in an environment using artificial intelligence techniques, in accordance with an embodiment of the invention;
- Figure 4 shows, by means of a block diagram, a method for controlling and managing a process in an environment using artificial intelligence techniques, in accordance with an embodiment of the invention;
- Figure 5 shows, by means of a block diagram, an example of processing which may be run by the system for controlling and managing a process in an environment using artificial intelligence techniques, in accordance with an embodiment of the invention;
- Figure 6 shows, by means of a block diagram, a further example of processing which may be run by the system for controlling and managing a process in an environment using artificial intelligence techniques, in accordance with an embodiment of the invention.

### . Description of some preferred embodiments

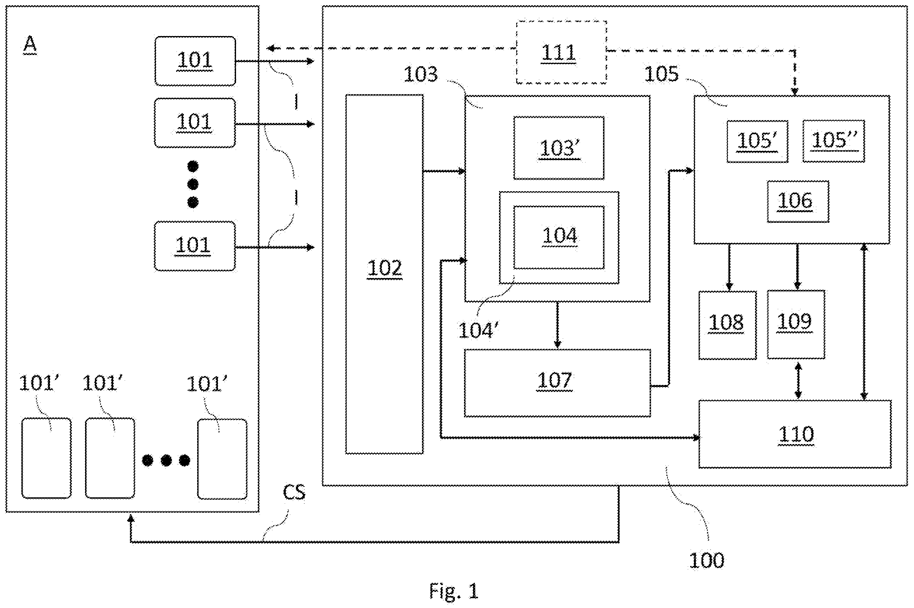

**.** With reference now to Figure 1, reference numeral 100 indicates as a whole a system for controlling and managing a process in an environment using artificial intelligence techniques, hereinafter also a control and management system or simply a system, according to the present invention.

**.** It should be noted that, in the Figures, the same or similar elements will be indicated with the same numeric or alphanumeric references.

**.** It is reiterated that "process" within an environment means both a safety management intervention (for example, from the simple sending of an alarm signal to the actual intervention of security personnel on site) as well as a maintenance intervention (for example, the replacement of one or more faulty lamps in the lighting equipment of an urban or industrial environment).

**.** In other words, the process also depends on the type of environment.

**.** For the purposes of the present description, environment means any infrastructure or space which needs continuous monitoring with subsequent intervention (process) in case of an event requiring an intervention to restore the condition in which the environment was before the aforesaid event occurred.

**.** An environment may be a closed or inside environment, such as an industrial plant, an industrial site, a shopping center, an airport, a station, a building, a dwelling, a shop, an office, a banking site, and so on, or an outside environment, such as a garden, an outdoor property, an area delimited by a perimeter, a parking lot, a parking stall, a town square or a street, lighting equipment of an urban or industrial environment, and so on.

**.** Event means any fact which alters the condition in which a given environment is.

**.** The type of event depends on the type of environment.

**.** For example:
**.** in the case of an industrial plant or industrial site, the event may be the access to the environment of unsuitable or unauthorized personnel;
**.** in the case of a private or public building, a shop or a banking site, the event may be the entry of ill-intentioned parties;
**.** in the case of an area delimited by a perimeter, the event may be the unauthorized entry of ill-intentioned parties;
**.** in the case of a parking lot or parking stall, the event may be a driver failing to pay a toll;
**.** in the case of a lighting installation (for example, the illuminations of a public street), the event may be the fault or malfunction of one or more installation lamps.

**.** In Figure 1, in addition to the system 100, an environment, indicated with the alphanumeric reference A, is also diagrammatically shown with a rectangle.

**.** The environment A comprises a plurality of components 101 for monitoring the scene of the environment A.

**.** Scene of an environment means a limited area or zone of the environment which may be monitored by a monitoring component of the plurality of monitoring components 101, the definition thereof also depending on the type of monitoring component present in such a limited area or zone.

**.** For example, in the case in which the monitoring component is a camera arranged in a room of a building, the environment A would be the building and the scene of the environment would be the room in which the camera is installed.

**.** In this regard, the monitoring components of such a plurality of components 101 of a scene of the environment A may comprise different types.

**.** For example, such monitoring components may comprise cameras, microphones, volumetric sensors, perimeter sensors, gas detection sensors, temperature sensors, pressure sensors and so on.

**.** Furthermore, such monitoring components may comprise low-level loT (from the English acronym, Internet of Things) sensors, such as pressure sensors, temperature sensors, level sensors, volumetric presence sensors and perimeter presence sensors.

**.** Furthermore, such monitoring components may comprise sensors for detecting raw dynamic environmental data, for example: radars, lidars or cameras or digital cameras. "Raw" data means unprocessed or unfiltered data which, possibly, will be processed only subsequently to interpret the information contained therein.

**.** For example, a camera or a lidar may provide, as raw dynamic environmental data, a frame buffer containing an image in RGB format, in the case of a camera, or in "point cloud" format, in the case of a lidar.

**.** With reference again to Figure 1, the environment A further comprises at least one process control component 101'.

**.** In particular, in the embodiment in Figure 1, the environment A comprises a plurality of process control components 101'.

**.** "Process control component" means a device, an apparatus capable of receiving and providing a process control command CS.

**.** The type of "process control component" depends on the type of "process control command".

**.** In this regard, "process control command" means a command which may be actuated within the environment A so as to restore the condition prior to the detection of an event which has compromised or may compromise the safety of the environment A or an alarm signal to be transmitted within the environment A or to be sent to an operating center or an emergency signal to activate a maintenance service and so on.

**.** Therefore, the plurality of process control components 101' may comprise basic actuators, such as, for example, sirens, Voip speakers or actuators for automatic gates, or even other communication devices for sending communications, messages or alarm signals to remote devices, for example, to an operating center, technologically advanced devices, such as, for example, terrestrial drones or robots, flying or marine drones configured to operate automatic actions based on received commands, as it will also be described below, or automatic dissuasion and information devices based on speech synthesis.

**.** Back to the plurality of components 101 for monitoring a scene of the environment A in general, each monitoring component of said plurality 101 is configured to provide a piece of information I representative of a scene of the environment.

**.** For the purposes of the present description, "piece of information representative of a scene of the environment" means any piece of information detectable by a monitoring component of the plurality 101.

**.** The type of information I depends on the type of monitoring component.

**.** For example, such a piece of information I may be a numeric data (detectable by a quantity sensor, for example, a pressure sensor, a temperature sensor, a level sensor and so on), an alarm signal (detectable by a presence sensor, a perimeter sensor and so on) or a digital video streaming or image (detectable by a lidar, a radar, a camera or a digital camera).

**.** It should be noted that the plurality of monitoring components 101 represents the monitoring components which a security system of an environment to be monitored in terms of security and management of a system is conventionally provided with.

**.** Back to Figure 1, in general, the system 100 further comprises a data communication interface module 102 operatively connected to the plurality of components 101 for monitoring a scene of the environment A.

**.** The plurality of components 101 for monitoring a scene of the environment A, once operatively connected to the interface module 102 of the system 100, are advantageously used to obtain one or more pieces of information I representative of a scene of the environment A in which the plurality of components 101 for monitoring a scene of the environment A is installed.

**.** It should be noted that the data communication interface module 102 may be operatively connected to the plurality of components 101 for monitoring a scene of the environment A by means of a data communication channel, the type thereof being of the wired type, for example, an RS 485 interface, a CAN bus, an Ethernet bus, or of the wireless type, for example, LoRa networks, Wi-Fi networks and so on.

**.** Back to Figure 1, the system 100 further comprises an object classification and recognition module 103, based on one or more neural networks 104 (therefore, by means of artificial intelligence techniques), operatively connected to the data communication interface module 102.

**.** The object recognition and classification module 103 is advantageously configured to extrapolate in real time, by means of the running of one or more neural networks 104 (therefore, by means of the running of artificial intelligence techniques) of the convolutional type (in English, Convolutional Neural Networks, CNNs), a plurality of attributes representative of an object detected within the scene of the environment by a piece of information I representative of a scene of the environment A provided by one of the monitoring components of the plurality of components 101 for monitoring a scene of the environment A.

**.** A neural network of the convolutional type CNN comprises a plurality of layers, i.e., an input layer, an output layer and a plurality of intermediate layers.

**.** Each layer comprises a plurality of nodes interconnected with one another.

**.** The nodes of different layers are interconnected to one another.

**.** The input data to a neural network are subject to the application of set decision rules present in each node, learned during the training step, starting from the input layer up to the output layer, passing through the plurality of intermediate layers.

**.** It should be noted that a number of nodes allowing a greater amount of input data to pass may increase the accuracy of the information which will be contained in the output data, depending obviously on the training provided to the neural network.

**.** By way of explanation, if the input data is a piece of information representative of a scene of an environment (for example, an image detected by a camera), the output data processed by the neural network will be a plurality of attributes representative of an object detected within the scene of the environment.

**.** It should be noted that the greater number of details relating to the objects recognized by the recognition and classification module 103 depends on the number of neural networks of the computational type working in parallel, analyzing the data and adding, in the output, objects to the result of the classification.

**.** For example, in the case of three neural networks working in parallel, objects which may be added are: worker (by the first neural network 1), wearing gloves and helmet (by the second neural network), 1 m and 80 cm tall (by the third neural network).

**.** For the purposes of the present description, "object" means both an object or a natural person or even an animal detectable within the scene, for example, an intruder or a vehicle detected by a presence sensor or perimeter sensor, as well as an event detectable within the scene, for example, the exceeding of a set pressure or temperature value or the detection of a fault or the sound of a siren or alarm.

**.** The plurality of attributes representative of an object comprise data of the object which may be used by the system 100 for recognizing and classifying the object itself, such as a category, a descriptive tag and a relative localization within the scene of the environment A in which the object has been detected.

**.** "Category" means the category in which the object detected may be cataloged: person, animal, bird, car, vehicle and so on.

**.** In this regard, the neural network 104 with which the classification and recognition module is equipped 103 is designed to recognize the category of the objects.

**.** The "descriptive tag" comprises further details of the object which the neural network 104 of the classification and recognition module 103 may always recognize and perceive, such as, for example, if a person is raised, lying down, moving, equipped with DPI (PPE) or not.

**.** "Relative localization" means the relative position of an object within the information I representative of a scene of the environment A, for example, the relative localization of an object in terms of position of digital pixels within a digital image detected by a digital camera.

**.** Back to Figure 1, in an embodiment, the object classification and recognition module 103 comprises a first training sub-module 103' of a neural network configured to classify and recognize new objects and/or classes of objects.

**.** "Classifying and recognizing" an object means attributing to an object a respective plurality of attributes, the contents of which have just been described.

**.** It should be noted that the training of a neural network is performed following the running of a sufficient number of examples, in which each detection of an object is precisely identified by means of a labeling activity which identifies the detection of the object with a descriptive and localization tag within the scene of an environment A.

**.** For example, upon reaching 1000 epochs, i.e., 1000 examples administered to the neural network 104 of the object classification and recognition module 103, to teach further information to the neural network 104, the first training sub-module 103' of a neural network is configured to generate an updated neural network matrix.

**.** It should be noted that the neural network matrix is a monolith data containing the weights of the neural network, which represents the understanding thereof of the system.

**.** This matrix is used for the running of one or more neural networks 104 on which the object classification and recognition module 103 is based.

**.** It should be noted that the first training module 103' is further configured, once a first training step has been run, to improve the training step itself by using new information which, in the step following the first installation, may increase the training dataset of the neural network. Training datasets are the sets of examples on which a neural network is initially instructed.

**.** In accordance with an embodiment, in combination with the preceding one and shown in Figure 1, the object classification and recognition module 103 comprises a second inference sub-module 104' configured to run said one or more neural networks 104.

**.** In particular, the second inference sub-module 104', running said one or more neural networks, is configured to extrapolate in real time, on the basis of the information I representative of a scene of the environment A (for example, a digital image, a video streaming and so on) provided by one of the monitoring components of the plurality of components 101 for monitoring a scene of the environment A, the plurality of attributes representative of an object detected within the scene of the environment.

**.** With reference to Figure 1, in general, the system 100 further comprises an object mapping and localizing module 107, operatively connected to the object classification and recognition module 103.

**.** The object mapping and localizing module 107 is configured to generate, on the basis of the plurality of attributes representative of an object within a scene of the environment A extrapolated for the object recognized and classified by the object recognition and classification module 103, geographical coordinates representative of the absolute position of the object.

**.** In greater detail, the mapping and localizing module 107 is configured to perform a geographic transformation or reprojection operation in which an attribute representative of a relative localization of the object within the piece of information I representative of a scene of the environment A is transformed or re-projected into geographical coordinates representative of an absolute position of the object.

**.** For example, the pixels of a digital image taken by a digital camera (relative localization) are transformed or re-projected into geographical coordinates representative of an absolute position of the object.

**.** This is a very important and advantageous aspect, since the system 100 is thereby capable of providing the absolute position of the object, therefore in an absolute format which may be used without distinction by any apparatus or instrument downstream of the system 100 for controlling and managing any process (safety, intervention, maintenance) within the environment A.

**.** In greater detail, the mapping and localizing module 107 comprises a respective software represented by one or more algorithms the running thereof allowing to perform object mapping and localization operations within a scene of the environment A.

**.** For example, in the case in which the objects are detected by components of the plurality of components 101 for monitoring of a scene of the environment, such as fixed or mobile cameras, the object mapping and localizing module 107 is configured to map such objects on a 2D or 3D cartography, so as to precisely identify the absolute localization related to the objects displayed by fixed or mobile cameras which may also be associated with other sensors present in the same scene.

**.** In other words, the function of the object mapping and localizing module 107 is to precisely georeference every object perceived by the cameras and by the sensors so as to advantageously implement process control logics of the relational and geographical type.

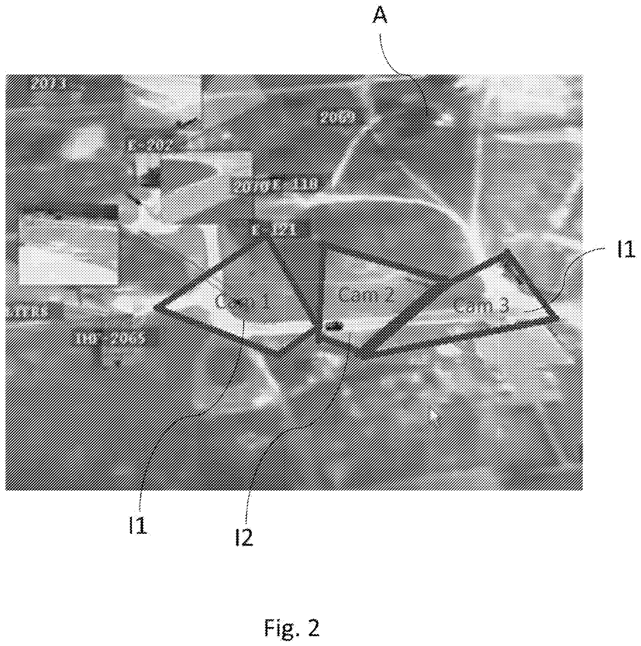

**.** With reference to the example shown in Figure 2, the images I1, I2, I3, IN, respectively provided by the cameras Cam1, Cam2, Cam3 distributed in the environment A, are superimposed on a synoptic map exactly in the area of the scene which they visualize of the real world, actually updating a texture of the map in real time, as if the view were from a satellite framing that area in real time.

**.** In this manner, the object mapping and localizing module 107 is capable of mapping and localizing, and therefore of georeferencing, every object in the frame in an absolute manner.

**.** Following this operation, the system 100, by means of the classification performed with the running of said one or more neural networks 104 and subsequently with the assignment of geographical coordinates representative of the absolute position of an object, is capable of identifying what it is and of associating to the object the plurality of attributes such as: object category, possibly unambiguous identification of the object itself (in the case in which the object has been identified by means of other loT, NN or visual TAG techniques and so on) and the absolute position of the object.

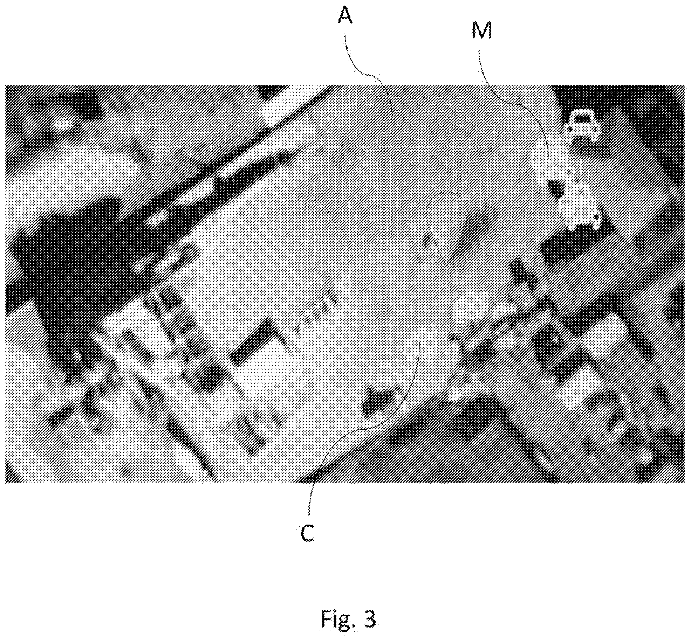

**.** With reference now to Figure 3, in an embodiment, it should be noted that different objects, i.e., objects recognized by the artificial intelligence (object classification and recognition module 103 by means of the running of one or more neural networks) as objects pertaining to different classes, will be represented by the process control and management module 105 with different iconography: cars M, lorries C, people and so on.

**.** Still with reference to the mapping and localizing module 107, it should be further noted that it is configured to define areas of the scene of the environment A which may be recognized by a name to allow a process control and management module 105 (workflow), described below, to effectively recognize certain specific areas of the environment A.

**.** Back again to Figure 1, the system 100 further comprises a process control and management module 105, operatively connected to the object recognition and classification module 103.

**.** The process control and management module 105 (workflow) is configured to determine a process control command CS, by combining the geographical coordinates representative of the absolute position of the object detected within the scene of the environment A with set process control rules.

**.** Furthermore, the process control and management module 105 is configured to provide the determined process control command CS to at least one process control component 101' which the environment A is provided with.

**.** Examples of process control components and process control commands have been described above.

**.** In other words, the process control and management module 105, once aware of the status of the scene as a function of the geographical coordinates representative of the absolute position of the object detected within the scene of the environment A and the set process control rules, is configured to implement countermeasures, automatic or not, for controlling and managing a process (safety, intervention or maintenance) in the environment A, in a precise manner, also from the geographical point of view, in accordance with the decision of how to behave for controlling or managing a specific situation.

**.** With regard to the set process control rules, they depend on the different case studies of interventions or processes which the system 100 may manage.

**.** By way of explanation, process control rules may be:
- classes of objects recognized by the neural network: cars, heavy vehicles, work vehicles, animals, people and whatever else the network has been trained to recognize;
- time constraints;
- spatial constraints based on UTM geographical coordinates;
- masking: areas to be hidden in the frames for privacy or functional reasons.

**.** With regard to this last point, at a general level, it should be noted that the process control and management module 105 is configured to provide, as a process control command CS, also digital images processed so that portions of the images (for example, the face of a person) are masked (for example, in reduced format at a resolution level) so that functional or privacy regulations are complied with but at the same time the image may be used for the purpose for which it is intended.

**.** For example, the image may be reprocessed so that it may be recognized that it is, for example, of a person, without allowing the distinction of the features of the face.

**.** Furthermore, again at a general level, the process control and management module 105 is configured to define, within a map of an area (scene) of the environment A, spatial sub-areas, by assigning them a specific name.

**.** For example, for a dwelling, it is possible to define the garden area, the perimeter area, the internal area, the access areas to the dwelling and so on.

**.** Furthermore, for each of these areas, process control rules may be applied, such as, for example:
- if a person is present in front of an access area after a set time (for example, 11 PM), with the alarm system on, the process control and management module 105 is configured to generate a pre-alarm and activate automatic loudspeakers of the chatbot type, described below.

**.** Alternatively, if in a perimeter area people are present which start approaching, the process control and management module 105 is configured to switch lights on and off inside the house.

**.** Still, alternatively, if in a perimeter area a vehicle with a known identifier is present, the process control and management module 105 is configured to automatically actuate an opening of a gate and activate a personalized greeting chatbot (the mode will be described below with reference to an embodiment of the invention).

**.** Still with regard to the set process control rules, in one embodiment, the process control and management module 105 comprises a process control sub-module 106 in which the set process control rules reside.

**.** In one embodiment, the process control sub-module 106 is a neural network, therefore the set process control rules are applied by means of artificial intelligence techniques.

**.** In a further embodiment, the process control sub-module 106 is a control logic (algorithm or software code), therefore the set process control rules are applied by means of conventional control logics.

**.** It should be noted that in an embodiment, not shown in the Figures, the process control and management module 105 comprises a memory unit for storing historical events which may be queried by an operator by means of dynamic search keys.

**.** In a further embodiment, in combination with any one of those previously described, the process control and management module 105 is configured to identify an object on the basis of the information I representative of a scene of an object, for example, on the basis of a digital image detected by a digital camera which the environment A is provided with, or on the basis of a piece of information I of a scene of an environment as data representative of an loT technology device which the loT technology device may send in a preconfigured format.

**.** Based on the reception of such data representative of an loT technology device, the process control and management module 105 is configured to identify the object as collaborative; if this is not the case, in the absence of data representative of an loT technology device, the process control and management module 105 is configured to identify the object as non-collaborative. This interpretation is generated by the process control and management module 105 by means of the process control and management sub-module 106, be it a neural network or an algorithm or software code.

**.** Thereby, the process control and management module 105 is capable of solving a disambiguation: for example, if an loT technology device is detected as down and the neural network does not recognize any person as down, then the process control command generated is not a priority alarm (red) but only a non-priority alarm (yellow).

**.** In a further embodiment, in combination with any one of those previously described, the process control and management module 105 comprises a first configuration component 105' of the system 100.

**.** The first component 105' of the process control and management module 105 is a front end for configuring and parameterizing the various modules and sub-modules which make up the system 100.

**.** Furthermore, in this embodiment, the process control and management module 105 comprises a second component 105" for controlling parallel processes run by the system 100, i.e., by the modules of the system 100, in case the system 100 should control and manage multiple processes in parallel.

**.** In accordance with a further embodiment, in combination with any one of the preceding embodiments, the process control and management module 105 is configured to store the processed data in log format in a database module, described below.

**.** In accordance with this embodiment, an operator may consult the log stored in the database module for statistical purposes.

**.** It should be noted that this type of storage (log) allows the information contained therein to be extrapolated in synthetic format and in a rapid manner.

**.** In accordance with an embodiment, in combination with any one of those previously described and shown in Figure 1, the system 100 further comprises a virtual assistance module 108 (chatbot) operatively connected to the process control and management module 105.

**.** The virtual assistance module 108 is configured to activate automatic dissuasion and information devices based on speech synthesis, comprised in the plurality of process control components 101', present in the scene of the environment A under monitoring.

**.** For example, such a virtual assistance module 108, on the basis of the operating scenario, is configured to select a loudspeaker which is closer to the object and use such a loudspeaker to send specific messages to the object identified by the process control and management module 105 (workflow) with respect to the information collected by means of the plurality of monitoring components 101.

**.** In accordance with a further embodiment, in combination with any of the preceding ones, the system 100 further comprises a second interface module 109 operatively connected to the process control and management module 105.

. The second interface module 109 is configured to convert the process control commands CS of the scene of the environment A provided by the process control and management module 105 in a format compatible with the format of loT (Internet of Things) technology services.

**.** It should be noted that the presence of the second interface module 109 advantageously allows the interoperability of the system 100 with the loT servers such as, for example, the servers supporting the MQTT protocol (from the acronym, MQ Telemetry Transport or Message Queue Telemetry Transport).

**.** As already stated above, the process control and management module 105 is configured to identify an object on the basis of the information I representative of a scene of an object, for example, on the basis of a digital image detected by a digital camera which the environment A is provided with, or on the basis of a piece of information I of a scene of an environment as data representative of an loT technology device which the loT technology device may send in a preconfigured format.

**.** It is reiterated that based on the reception of such data representative of an loT technology device, the process control and management module 105 is configured to identify the object as collaborative; if this is not the case, in the absence of data representative of an loT technology device, the process control and management module 105 is configured to identify the object as non-collaborative. This interpretation is generated by the process control and management module 105 by means of the process control and management sub-module 106, be it a neural network or an algorithm or software code.

**.** In accordance with a further embodiment, in combination with the preceding one and shown in Figure 1, the system 100 further comprises a real-time database module 110 operatively connected to the object classification and recognition module 103, to the process control and management module 105 (workflow) and to the second interface module 109.

**.** In particular, the real-time database module 110 is configured to store in real time the data generated by the object classification and recognition module 103, by the process control and management module 105 (workflow) and by the second interface module 109.

**.** Furthermore, the real-time database module 110 is configured to allow the object classification and recognition module 103, the process control and management module 105 (workflow) and the second interface module 109 to communicate with one another.

**.** In this regard, the real-time database module 110 is configured to use the geographical coordinates representative of the absolute position of the object as the primary query key and by means of the process control and management module 105 it is configured to interpret the scenario and generate a process control command CS.

**.** In one embodiment, the real-time database module 110 is serialized, i.e., it is configured to store data in real time in the cloud or in a local database, even on files, so that in case of a down in the system 100 the data will not be lost and, when the system 100 is restored, they are available again and consistent with the last stored version.

**.** The serialization of the real-time database module 110 advantageously allows to restore the entire system 100 in case of a blackout.

**.** In accordance with an embodiment, in combination with any one of those previously described and shown with dashed lines in Figure 1, the system 100 further comprises a robotics integration module 111 operatively associated with the process control and management module 105.

**.** The process control and management module 105 is configured to directly interface, by means of the robotics integration module 111, completely automatic or semi-automatic robotic sub-devices forming part of the plurality of components 101 for monitoring a scene of the environment A.

**.** Examples of such components may be sensors, in particular, cameras, lidars, environmental sensors (smoke, gas, temperature, pressure sensors).

**.** In accordance with a further embodiment, in combination with any one of those previously realized, not shown in the Figures, the system 100 may further comprise a blockchain module configured to notarize and allow the execution of automatic payments by means of a respective application (wallet).

**.** Notarization is important for the legal certification of the data detected; in the case of charges being filed, for example, against a theft, the fact that the system 100 is capable of automatically notarizing the attempted theft or robbery also represents a clear identification of the date and time of the moment in which the offense was identified, which is useful for both legal and insurance purposes.

**.** Furthermore, in accordance with a further embodiment, in combination with any one of those previously realized, not shown in the Figures, the blockchain module is configured to allow the execution of an automatic payment application (wallet).

**.** It should be noted that the possibility of providing an automatic payment application (wallet) is important in relation to the offering of the system 100 on demand, in a flexible form.

**.** In accordance with a further embodiment, in combination with any one of those previously described, not shown in the Figures, the system 100 is configured to provide an operator with a user display module by means of a web platform.

**.** Such a user display module may be based on any of the following platforms: WebApp, Virtual Reality, Augmented Reality, Bot in a mobile environment such as, for example, on Telegram, WhatsApp, Skype platforms, and so on.

**.** Furthermore, the system 100, in an embodiment, may comprise an integrated service micropayment method, i.e., the system 100 may receive micropayments and automatically activate services for the user in a "pay per use" perspective.

**.** Furthermore, the system 100 may be configured to interface with other systems based on artificial intelligence for domestic use, such as, for example, Alexa or Google Home.

**.** The system 100 may be sold in the form of a user license or in the form of a service.

**.** Generally, the system 100 is developed following micro service logic.

**.** This advantageously allows it to be scalable from cloud architecture to embedded architectures which include all or most of the integrated modules.

**.** In this regard, in terms of software architecture, it should be noted that each module (or sub-module) of the system 100 is an executable software module residing in a respective server which is remote with respect to the system 100 (cloud architecture) or a local electronic processor integrated in the system 100 (embedded architecture), which provides a plurality of dedicated microprocessors, for example, of the Core GPU type.

**.** This technology advantageously allows to support parallel data processing, even massive data processing. For example, a server of this technology may be also equipped with 20,000 microprocessors, for example, of the Cuda Core technology, which may process data in parallel.

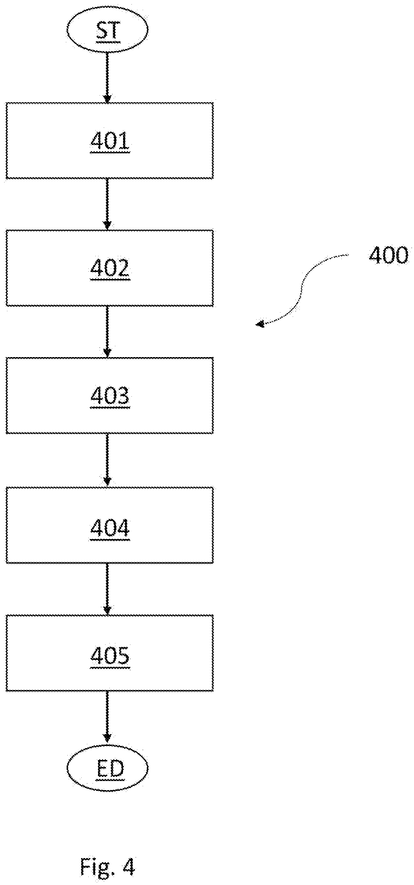

**.** With reference now also to the block diagram in Figure 4, a method 400 is now described for controlling and managing a process within an environment A using artificial intelligence techniques, hereinafter also simply a control method or method.

**.** It is reiterated that the environment A comprises a plurality of components 101 for monitoring a scene of the environment A.

**.** Definition and examples of such a plurality of components 101 for monitoring a scene of the environment A have been provided previously.

**.** Back to Figure 4, the method 400 comprises a symbolic step of starting STR.

**.** The method 400 comprises a step of receiving 401, by a data communication interface module 102 of a system 100 for controlling and managing a process within an environment A, operatively connected to the plurality of components 101 for monitoring a scene of the environment A, a piece of information I representative of a scene of an environment A provided by one of the monitoring components of the plurality of components 101 for monitoring a scene of the environment A.

**.** Furthermore, the method 400 comprises a step of extrapolating 402 in real time, by an object classification and recognition module 103 which the system 100 is provided with, by means of the running of one or more neural networks 104 (therefore, by means of artificial intelligence techniques), operatively connected to the data communication interface module 102, a plurality of attributes representative of an object detected within the scene of the environment A by the information I representative of the scene of the environment A provided by one of the monitoring components of the plurality of components 101 for monitoring a scene of the environment A.

**.** Furthermore, the method 400 comprises a step of generating 403, by a mapping and localizing module 107 of the plurality of components 101 for monitoring a scene of the environment A which the system 100 is provided with, operatively connected to the object classification and recognition module 103, on the basis of the plurality of attributes representative of an object within a scene of the environment A extrapolated for the object recognized and classified by the object recognition and classification module 103, geographical coordinates representative of the absolute position of the object.

**.** The method 400 further comprises a step of determining 404, by a process control and management module 105 which the system 100 is provided with, operatively connected to the object recognition and classification module 103, a process control command CS, by combining the geographical coordinates representative of the absolute position of the object detected within the scene of the environment A extrapolated for the object recognized and classified by the object recognition and classification module 103 with set process control rules.

**.** Finally, the method 400 comprises a step of providing 405, by the process control module 105, the determined process control command CS to at least one process control component 101' which the environment A is provided with.

**.** Definition and examples of said at least one implementing component 101' and of said process control command CS have been provided previously.

**.** The method 400 includes a symbolic step of ending ED.

**.** Other steps of the method, not repeated herein, have already been described previously with reference to the operations which may be performed by the modules described in accordance with the different embodiments of the system 100 object of the present invention.

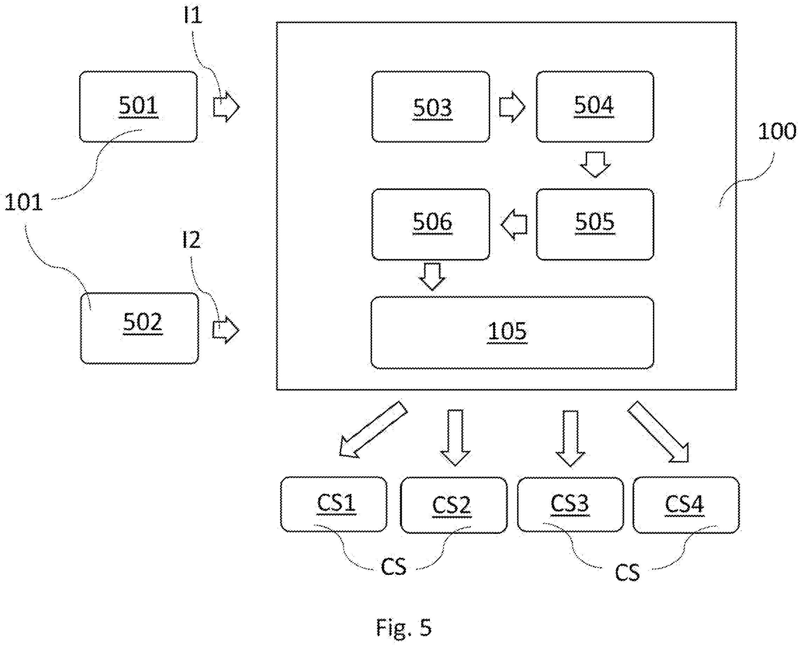

**.** With reference now to the flow diagram in Figure 5, an example of the processing of the pieces of information I1, I2 is now described, representative of scenes of an environment A, in particular, of a digital video stream I1 provided by a digital camera 501 arranged within an environment A and of data I2 (for example, an identification signal such as one provided by an RFID tag) provided by an loT technology electronic device 502 also arranged within the environment A.

**.** The digital video stream I1 is subject to an image stabilization operation (block 503) to limit interpretation problems in case the camera is mounted on poles subjected to winds or vibrations present in the environment before being processed.

**.** The image stabilization module is between the video stream and the neural network and the subsequent modules and performs a processing to make the scene tracking more robust and prevent the positions from moving due to wind or vibration where the camera is installed.

**.** Subsequently, the stabilized (therefore cleaned) video stream I1 is subject to the running by a neural network (block 504).

**.** The output of the neural network is subject to a rectification operation (block 505) to remove the distortion given by the camera lens feature.

**.** This operation helps making the localization more precise, since the image is straightened (e.g., the difference between the oval video of an action camera and that of a conventional camera) and it is very easy to find video surveillance systems with cameras with very wide focal lengths to take as much scene as possible, but, in that case, the image is very distorted so the localization is poor.

**.** The output of the rectification operation is subject to a geographic transformation or reprojection operation (block 506) in which the pixels of the camera (relative localization) are transformed or re-projected in geographical coordinates representative of an absolute position of the object, so that any image seen in the camera has a correspondence with a geographical coordinate which is certain.

**.** Therefore, the object identified by the neural network advantageously has geographical coordinates which are certain.

**.** The output of the geographical transformation or reprojection block and the data I2 are provided to the process control and management module 105 which provides a process control command CS as output.

**.** Such a process control command CS of the environment A may include:
**.** a first alarm command CS1 (front-end alarm);
**.** a message of the bot telegram type CS2;
**.** a voice message in a speaker CS3 (Chat Bot Speakers IP);
**.** a command in loT technology CS4 such as, for example, doors opening/closing, action on mechanisms, fire alarm activation and so on.

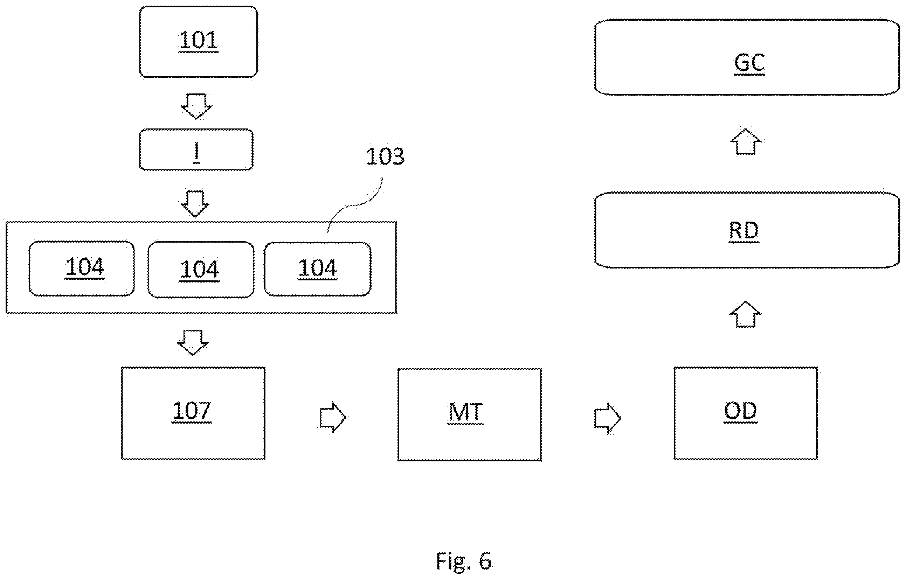

**.** With reference now to Figure 6, an example of processing is now described, which may be run by the system for controlling and managing a process in an environment using artificial intelligence techniques, in accordance with an embodiment of the invention, as well as examples of some functions.

**.** The plurality of components 101 for monitoring a scene of the environment A provides a plurality of pieces of information I representative of a scene of the environment A to the object classification and recognition module 103, on the basis of a plurality of neural networks 104 of the convolutional type, CNN.

**.** The neural networks 104 work in parallel and, by means of a respective inference process, they create a digital copy of what has been monitored by the plurality of components 101 for monitoring a scene of the environment A.

**.** Such a digital copy comprises a plurality of attributes representative of an object detected within the scene of the environment A.

**.** In greater detail, each neural network 104 of the convolutional type identifies, classifies and describes in real time the classifiable objects, by means of the respective inference process, through the plurality of pieces of information I representative of a scene of the environment A, provided by the plurality of components 101 for monitoring a scene of the environment A.

**.** In fact, from a two-dimensional input matrix, by applying different neural networks 104 of the convolutional type, it is possible to classify the objects defined with screen coordinates by gradually introducing more details to refine the definition.

**.** Each neural network 104 of the convolutional type used employs data sets specially made on the basis of a database of correlated images specifically collected for the application in that environment A, capable of recognizing categories of specific objects, such as, for example: persons, animals, means of transport and objects.

**.** The plurality of neural networks 104 of the convolutional type is capable of better describing the objects displayed, for example, people wearing helmets, gloves, boots, or means of transport such as lorries, cars, motorcycles, even of a set color (for example, blue) and so on.

**.** The analysis of the scenario by the plurality of neural networks 104 of the convolutional type may also comprise, for example, by means of the use of a double neural network of the convolutional type, the postural analysis or the creation of a system for analyzing the spatial position of the person, such as, for example: person seated, curled up, standing up and so on.

**.** It should be noted that this function is very important, in particular, in defining the "man down" status.

**.** The basic functions of the neural networks 104 comprise:
**.** face recognition;
**.** recognition of transport vehicle license plates;
**.** object recognition;
**.** object localization;
**.** skeleton recognition (main reference marks);
**.** posture recognition;
**.** "man down" condition recognition module;
**.** scenario recognition;
**.** fire detection;
**.** smoke detection;
**.** headcount in a specific area;
**.** headcount of people entering an area;
**.** headcount of people leaving an area;
**.** loitering functions in some predefined areas;
**.** advanced mapping and tracking functions;
**.** 2D object localization;
**.** 3D object localization;
**.** identification of the speed and of the direction of each individual object;
**.** analysis of predefined areas by means of the definition of geofence polygons;
**.** analysis of predefined paths by means of the geographical definition of segments: a means of transport/person is present on a specific path;
**.** tracking of objects and assignment of an individual ID both locally and globally with a map reference.

**.** The object mapping and localizing module 107 generates, on the basis of the plurality of attributes representative of an object within a scene of the environment A extrapolated for the object recognized and classified by the object recognition and classification module 103, geographical coordinates representative of the absolute position of the object.

**.** In fact, the object mapping and localizing module 107 transforms the screen coordinates into geographical coordinates.

**.** The digital copy, after being output from the object mapping and localizing module 107, is transformed by the object classification and recognition module 103, into a metadata MT, which, by means of subsequent processing processes, still performed by the object classification and recognition module 103, is transformed into a plurality of digital objects OD in which the individual objects are identified by the peculiar features thereof; for example, an object may be: a person, 1 m and 70 cm tall, dark hair.

**.** In specific cases, the system 100 may also use a face recognition algorithm which may also assign the object a set personal identity. This is just an example of the multiple descriptive data which may be associated with an object.

**.** In the case of a means of transport, an example of an object may be: a red car, XYZ model, with license plate XX-YYY-ZZ.

**.** It should be noted that each digital object is associated with an absolute identifier ID which allows the tracking thereof, in particular, when using a multi-tracking algorithm, which allows the tracking of the object while maintaining the absolute identifier even when it passes from one camera to another, a specific temporal location and an absolute or relative localization, however, always referable to a global geographic reference system.

**.** The digital objects defined by means of the geospatial localization algorithms to which the temporal location has been attributed define a digital twin RD of the real scenario shown by the environment A under monitoring.

**.** Starting from the digital objects defined in the digital twin RD, it is possible to define, within a knowledge graph GC (or k-graph), the interactions between the various objects and the relations binding them.

**.** It should be noted that this definition may be obtained by using of one or more neural networks of the recurrent type RNN (Recurrent Neural Network) and neural networks of the generative adversarial type GA (Generative Adversarial Network).

**.** A neural network of the recurrent type, by using long-short term memory algorithms (Long Short Term Memory, LSTM), is capable of describing the scenario in detail.

**.** In an embodiment, alternatively or in combination with the preceding one, the definition, starting from the digital objects defined in the digital twin RD, within a knowledge graph GC (or k-graph), of the interactions between the various objects and the relations binding them may also be reconstructed using more conventional algorithms, even if the tendency, to obtain an ever better quality of the understanding of the scenario, will be to use algorithms which are based on neural networks.

**.** A neural network of the generative adversarial type GANN is capable of subsequently creating a synthetic display of the scenario to be used in the subsequent analysis steps by the process control and management module 105 (workflow).

**.** The synthetic result of a neural network of the generative adversarial type, with the analytical result obtained from the metadata, is used to create a self-learning system capable of improving the future self-learning performance of the neural network, both in terms of classification and in terms of the understanding of the scenario.

**.** It should be noted that the knowledge graph GC is preferably historicized, in real time, in a specific and particular digital register or real-time blockchain present within the infrastructure of the system 100 so as to ensure that the digital twin RD is accurately stored and may, at any time, be queried by artificial intelligence modules (Al) which verify the rules of the scenario by means of the predefined and programmed process control and management module 105 (workflow).

**.** Thereby, it is possible for the artificial intelligence modules to know at all times the correspondence of the scenario with the assigned supervision rules.

**.** In case a procedure is disregarded and an alarm is generated, the same will be immediately notified to the person in charge of supervising the system as well as to the contact persons programmed within the process control and management module 105 (workflow).

**.** All alarm and/or alert data are stored in a special digital register or public blockchain on which it was decided to notarize the system alarm log.

**.** It should be noted that the system 100 uses one or more digital public registers for storing the alarm signals, while for the management of the internal consistency of the digital twin RD it uses the special digital register specifically designed to optimize the operation of the system 100.

**.** In greater detail, an important aspect of the digital register specifically created for the system 100 (SophyAI) is the introduction of the geographical dimension into the digital register, in addition to the temporal data and to the data related to the concatenation of the events digitized by means of the knowledge graph GC. Therefore, each piece of data is closely related to the geographic identifier thereof.

**.** This aspect advantageously allows an effective and fast indexing of the data historicized in the digital register of the system 100, allowing extremely fast response times in the historical data research steps.

**.** It should be noted that the writing of the information in the digital register of the system 100 is linked to the sensors present within the area which ensure the block validation step as much as consent mechanisms of the POS type (from the acronym, Proof of Stake) present in other blockchains such as Ethereum 2 or Lybra.

**.** It should be further noted that the object classification and recognition module 103 (module Al) and the process control and management module 105 (workflow) are of the plug-in type, therefore, over time, more and more complex algorithms may be implemented, capable of better detailing the digital twin of the environment A in which the system 100 is installed.

**.** The same consideration may be made for the process (workflow)/cognitive modules which may implement increasingly complex and interactive rules.

**.** In general, the objective of the cognitive workflow modules is to optimize processes with a view to improving the Key Performance Indicator KPI and/or the Key Risk Indicators KRI of the process, both proactively and by suggesting the administration of training modules to the personnel in charge of the process.

**.** By means of predictive modules and the real-time analysis of the digital register of the system 100, it will be possible, using geospatial tracking algorithms and a query within the metadata knowledge graph GC (k-graph), to identify in real time the people present in a specific area and having determined physical features which also are in another position in a previous time instant (for example, 5 minutes before), without having tracked the position of the person of interest at any time, but using predictive algorithms and the calculation of the optimal path.

**.** The functions of the process control and management module 105 (workflow) comprise:
**.** programmable workflow;
**.** analysis of the digital twin RD and verification of the correspondence to user-created plans;
**.** analysis of the possible alarm conditions (alert);
**.** analysis of the possible warning conditions;
**.** verification of the compliance with predefined KPI indicators within the process quality plan;
**.** verification of the compliance with predefined KRI indicators within the process risk plan;

**.** It should be noted that the data of the KPI indicators and of the KRI indicators are created and updated on the basis of a historical series produced by means of the cognitive analysis of the digital twin RD produced in real time by the system 100.

**.** The digital register functions (blockchain) comprise:
**.** digital geographic register for a brief description of the scenario;
**.** integration with digital public registers, in particular with Ethereum.

**.** Below, some application examples are now provided of the system 100 in accordance with the present invention.

**.** An important aspect of this configuration of the system 100 is certainly related to privacy.

**.** In fact, in the process flow, the images which are collected within the system 100 stop in the object classification and recognition module 103 while in the digital twin RD and in the knowledge graph GC the objects are present but only in the form of metadata.

**.** The fact that the images are "lost" shows a very important aspect from the privacy point of view, as such images may no longer be recovered, for example, for fraudulent uses, making the system 100 "privacy proof".

### . Example of application in a security system for an industrial warehouse

**.** Cameras keep the environment to be monitored under control in real time, while the system 100, by means of the running of one or more neural networks, decodes the scenario in real time, understands, for example, the number of people present, the position thereof, and, consulting the rules present in the process control and management module 105, it verifies whether they are in areas authorized or not based on the time of the day, the position of the target in relation to the map of the security system.

**.** In case these conditions are not confirmed, while a pre-alarm or an alarm is generated anyway, the system 100 will react automatically with appropriate countermeasures: it will activate predetermined and localized voice signals to get the ill-intentioned parties away.

**.** During the control and supervision activity, the system 100 automatically creates a log in which the date and time are specified of all the recorded events which led to the determination of the alarm and to the activation of the countermeasures.

**.** An operator of a center receives all this information in real time and supervises the activity of the system 100, and then of the artificial intelligence based on one or more neural networks.

**.** The advantage of this approach is that the operator may control and manage many more events in real time with a wealth of details never possible before.

### . Example of application for monitoring banking sites

**.** The system 100 is connected to cameras which are inside and outside the banking site to monitor and understand the scenario.

**.** The system 100, by means of neural networks, is capable of recognizing particular elements, such as, for example, masked faces, the presence of weapons (guns, rifles, knives) if framed by cameras.

**.** This is made possible by a particular training of the neural network 104 of the object classification and recognition module 103 which allows the artificial intelligence to also recognize weapons within the scene of the environment A.

**.** This identification may be completely silent to avoid alarming the intruder or the robber.

**.** In fact, the neural network 104 of the object classification and recognition module 103 automatically detects the presence of a weapon in a hand of a person, without the need for an alarmed operator to press any alarm button (panic button).

**.** Furthermore, the detection of these elements outside the security door at the entrance to the banking site (also known as mantrap) may already activate countermeasures such as, for example, the blocking of the entrance to the branch and the automatic sending of a pre-alarm to the operating center while the system 100 is already capable of counting both the people inside, the position thereof and the position and the number of the alleged robbers.

**.** This data may be very useful in the emergency management step of the police.

**.** It should be borne in mind, of course, that masking the cameras is essential to prevent them from being compromised by the attackers.

**.** In case of robbers acting with uncovered faces, using neural networks in the system 100 which recognize faces of wanted people, would make it advantageously possible to immediately identify a threat and the level of danger thereof.

### . Example of application in an industrial plant

**.** From the information provided by cameras and sensors present in an industrial plant it may be possible to identify at any time, by means of the system 100, how many persons are present and where they are, especially near the areas considered most critical (construction sites, containers of liquids and gases, boilers).

**.** The system 100 is also capable of understanding which is the clothing (personal protection equipment, PPE) worn by the worker, in particular, the helmet, the gloves, the glasses, the high visibility jacket, and so on.

**.** The system 100 is further capable of understanding whether the personnel in the construction site actually complies with the regulations, wears PPE, if the vehicles used are not in unauthorized positions and how many people are in the plant in case of evacuation as well as identifying the position thereof in case they have not yet left the plant.

**.** This type of technology may further help security personnel to be more effective and ensure high quality standards.

**.** Within an industrial plant, the system 100, by means of the artificial intelligence given by the use of neural networks, by means of the loT technology cameras and sensors, may also identify fire outbreaks and determine the immediate intervention of fire-fighting teams or of automatic robotic systems capable of intervening safely in case of an emergency.

### . Smart City (Smart Parking) application example

**.** Parking stalls are visually controlled by means of the system 100.

**.** In fact, a single camera, positioned at a suitable height, may keep a large area of the parking lot under control (surveillance cameras already present in the area may also be used).

**.** The system 100 creates a visual matrix of the area identifying the vehicles present, calculating the stay time thereof, the correct position in the stalls and so on.

**.** The system 100, being capable of defining the free and occupied spaces, may, with specific and simple applications, directly inform the drivers, both to warn them about the position of the free stall, and, by confirming the abandonment of the stall, if they have left the parking (car theft notice).

**.** No structural intervention is provided on the parking area but only the installation of a video camera connected to the network to be connected to the system 100.

### . Smart City Light fault detector application example

**.** The system 100, applied to normal video surveillance cameras, is capable of identifying and georeferencing numerous light points, interpreting the status thereof.

**.** In case of the default of a light point (light bulb), the system 100 immediately alerts an operating center by sending the exact position of the pole on which the faulty light point is mounted.

**.** Even in case a municipal video surveillance system is not present, the investment required for the installation of a video camera (which usually, based on the positioning thereof, may keep even more than ten poles under control) is much lower than that required for the networking of an equivalent number of light points.

**.** In the case of sodium- or mercury-vapor lamps (not all lamps are LED lamps), the system may interpret the change in temperature and/or color of the lamp (warning of the forthcoming fault) and promptly notify those responsible for the replacement thereof.

### . Smart Road Traffic detection, Line detection application example .

**.** The system 100 may be configured and used to detect the level of traffic intensity present in a road.

**.** By means of the monitoring cameras present in city centers, which are currently used only for security or anti-burglary applications, by means of the 100 system it is possible to:
**.** map the images coming from the cameras present along the road under monitoring;
**.** apply the object classification and recognition module 103;
**.** configure the process control and management module 105 so as to provide as output the quantity of cars present in the road under monitoring.

**.** The cars that the object classification and recognition module will classify will be localized and the process control and management module 105 will assign to the stretch of road the amount of cars present in the different time slots.

**.** All these data will be available in real time, for example, to reschedule the traffic light preference system, or will be available in a historical database so as to reconfigure the city traffic management system.

### . Example of smart localization in an industrial plant for the anti-collision of vehicles.

**.** The system 100 may be configured in an industrial environment to allow, by using the cameras which are normally used for the safety control of the industrial plant, cataloging the objects present in the scenario covered by the video surveillance of the cameras.

**.** By means of the mapping of the video received it will be possible to identify the position of the industrial vehicles such as, for example, forklifts, cranes, lorries and so on, present in the scenario.

**.** In addition to these industrial vehicles, it is further possible to recognize people, cars and other means which will use the area to move within the industrial plant.

**.** By means of the system 100 it is possible to precisely identify the absolute position of all the objects in real time in a complete map of the plant.

**.** For example, so-called Yellow Car vehicles, i.e., very bulky handling machines with visibility problems due to the transport of large pipes or objects blocking the peripheral visibility to the driver, by means of the system 100, may receive in real time, on board the vehicle, the position of the other objects and take it into account by means of algorithms alerting of the probability of collision between the vehicle and any cars or persons present in the scenario.

**.** The system 100 may also be configured to manage both the means equipped with loT technology devices, such as RFID tags, also defined as collaborative means (capable of sending an identification signal), but also means, people or non-collaborative things (i.e., not able to send an identification signal) therefore simply recognized by a neural network but not equipped with loT technology identification systems.

**.** As it can be observed, the object of the present invention is fully achieved.

**.** In fact, the system 100, comprising different modules, enables the scenario in which the system 100 operates to be identified in a conscious manner and to make operational choices (safety control commands) in real time.

**.** The system 100, based on neural networks, therefore by means of artificial intelligence, is capable of self-learning from new scenarios by means of algorithms capable of producing new training datasets to be subjected to self-learning which may be subsequently shared with all the modules which are in charge of inference activities.

**.** Furthermore, the system 100 is capable of recognizing objects or classes of objects and of determining the position thereof within the image, captured by a camera, received as input in the object classification and recognition module 103 forming part of the system 100.

**.** The fact of transforming the data detected by the module for classifying and recognizing 103 objects which are georeferenced, independent and time-tagged, which may be used by the system 100 to establish predefined scenarios, allows the system 100 to make adequate and even very complex choices.

**.** The system 100 is capable, by means of artificial intelligence techniques (neural networks) of identifying objects, people or things abandoned within a scenario where they were not initially present in the environment A.

**.** In other words, the system 100 is capable of recognizing objects which have been inserted subsequently in a scene of the environment A, for example an abandoned suitcase or a means of transport in a road which has remained stationary in a lane.

**.** Furthermore, the system 100 is capable of knowing, besides the type and class of an object, also a piece of localization information related to the start and subsequently the absolute position of the data coming from the sensor (for example, a detected object).

**.** Still, in accordance with the present invention:
- video streams provided to the system 100 may come from the structure, from terrestrial, flying or marine mobile robots and/or from remote structures;
- video streams used by the system 100 to interpret the operating scenario may be mapped at a metric level within a planimetry of a scene of an environment;
- video streams used by the system 100 to implement the operating scenario may be mapped at a cartographic level within a global geographical map;
- video streams coming from cameras may be automatically normalized by the system 100 to remove deformations caused by the lenses of the cameras before sending the image to the object classification and recognition module 103;
- video streams coming from the cameras may be automatically stabilized to limit interpretation issues if the cameras are mounted on poles subjected to winds or vibrations present in the environment before being processed.

**.** The process control and management module 105 of the system 100 is advantageously configured to operate automatic choices interfacing with input devices, output devices and the real-time database module to which it is connected.

**.** The process control and management module 105 of the system 100 is configured to manage data coming from physical objects: loT sensors, in particular cameras, lidar systems, home automation sensors.

**.** The process control and management module 105 of the system 100 may be coded by means of a neural network or by means of a sequential programming logic.

**.** The process control and management module 105 of the system 100 is capable of applying set process control rules on logical objects (time, geofence, masking, geographical area in which a situation occurs in the scenario in terms of location, time, object detected).

**.** The process control and management module 105 of the system 100 is further capable of operating with output devices such as for example: sirens, chatbots, power relays, home automation actuators.

**.** The process control and management module 105 of the system 100 may be equipped with a sub-system for the self-verification of the operation of the individual operating components.

**.** The process control and management module 105 of the system 100 may operate on data coming from loT standard sources by means of the MQTT protocol, such as, for example, GPS localization data, pre-existing system sensors and so on.

**.** The system 100 is actually a system for spatially identifying, controlling and managing things and people in an environmental context, for the safety and analysis of a process, by using artificial intelligence techniques (neural networks).

**.** An important aspect of the system 100 is certainly related to privacy.

**.** In fact, as previously mentioned, in the process flow, the images which are collected within the system 100 stop in the object classification and recognition module 103 while in the digital twin RD and in the knowledge graph GC the objects are present but only in the form of metadata.

**.** The fact that the images are "lost" shows a very important aspect from the privacy point of view, as such images may no longer be recovered, for example, for fraudulent uses, making the system 100 "privacy proof".

**.** Those skilled in the art, in order to meet contingent needs, may modify and adapt the embodiments of the system and related method described above, and replace elements with others which are functionally equivalent, without departing from the scope of the following claims. Each of the features described as belonging to a possible embodiment may be achieved independently from the other embodiments described.

## Claims

1. A system (100) for controlling and managing a process within an environment (A), the environment (A) comprising a plurality of components (101) for monitoring a scene of the environment, each component of said plurality (101) being configured to provide a piece of information (I) representative of a scene of the environment (A), the system (100) comprising:
- a data communication interface module (102) operatively connected to the plurality of components (101) for monitoring a scene of the environment (A);
- an object classification and recognition module (103), based on one or more trained neural networks (104), operatively connected to the data communication interface module (102), said object recognition and classification module (103) being configured to extrapolate in real time, by means of the running of one or more trained neural networks (104), from a piece of information (I) representative of a scene of the environment (A) provided by one of the monitoring components of the plurality of components for monitoring (101) a scene of the environment (A), a plurality of attributes representative of an object detected within the scene of the environment (A), the plurality of attributes representative of an object comprising data of the object which may be used by the system (100) for recognizing and classifying the object itself;
- an object mapping and localizing module (107), operatively connected to the object classification and recognition module (103), said mapping and localizing module (107) being configured to generate, on the basis of the plurality of attributes representative of an object within a scene of the environment (A) extrapolated for the object recognized and classified by the object recognition and classification module (103), geographical coordinates representative of the absolute position of the object, the mapping and localizing module (107) being configured to perform a geographic transformation or reprojection operation in which an attribute representative of a relative localization of the object within the piece of information (I) representative of a scene of the environment (A) is transformed or re-projected into geographical coordinates representative of an absolute position of the object;
- a process control and management module (105), operatively connected to the object recognition and classification module (103), said process control and management module (105) being configured to determine a process control command (CS), by combining the geographical coordinates representative of the absolute position of the object detected within the scene of the environment (A) with set process control rules, the process control and management module (105) being configured to provide the determined process control command (CS) to at least one process control component (101') which the environment (A) is provided with.

2. A system (100) according to any one of the preceding claims, wherein the object classification and recognition module (103) comprises a first training sub-module (103') of a trained neural network configured to classify and recognize new objects and/or classes of objects.

3. A system (100) according to claim 2, wherein the object classification and recognition module (103) comprises a second inference sub-module (104') configured to run said one or more trained neural networks (104), the second inference sub-module (104'), running said one or more trained neural networks, being configured to extrapolate in real time, on the basis of the information (I) representative of a scene of the environment (A) provided by one of the monitoring components of the plurality of components for monitoring (101) a scene of the environment (A), the plurality of attributes representative of an object detected within the scene of the environment (A).

4. A system (100) according to any one of the preceding claims, wherein the combination of the geographical coordinates, representative of the absolute position of the object detected within the scene of the environment (A) extrapolated for the object recognized and classified by the object recognition and classification module (103) with the set process control rules, is run by the process control module (105) by means of the running of one or more trained neural networks (106) which the process control and management module (105) is provided with and within which the set control rules are present.

5. A system (100) according to any one of the preceding claims, further comprising a virtual assistance module (108) operatively connected to the process control and management module (105), configured to activate automatic dissuasion and information devices based on speech synthesis, comprised in the plurality of components for the actuation (101') of safety control commands.

6. A system (100) according to any one of the preceding claims, further comprising a second interface module (109) operatively connected to the process control and management module (105), the second interface module (109) being configured to convert the process control commands (CS) within the scene of the environment (A) provided by the process control and management module (105) in a format compatible with the Internet of Things technology format, loT.

7. A system (100) according to claim 6, further comprising a real-time database module (110) operatively connected to the object classification and recognition module (103), to the process control and management module (105) and to the second interface module (109), the real-time database module (110) being configured to store in real time the data generated by the object classification and recognition module (103), by the process control and management module (105) and by the second interface module (109).

8. A system (100) according to any one of the preceding claims, wherein the process control and management module (105) comprises a process control sub-module (106) in which the set process control rules reside, the process control sub-module (106) being a trained neural network or a programming logic.

9. A system (100) according to any one of the preceding claims, wherein the process control and management module (105) is configured to identify an object on the basis of the information (I) representative of a scene of an object or on the basis of a piece of information (I) representative of a scene of an environment as data representative of an loT technology device that the IoT technology device may send in a preconfigured format, based on the reception of such data representative of an loT technology device, the process control and management module (105) being configured to identify the object as collaborative; if this is not the case, in the absence of data representative of an loT technology device, the process control and management module (105) is configured to identify the object as non-collaborative.

10. A system (100) according to any one of the preceding claims from 7 to 9, wherein the process control and management module (105) is configured to store the data processed in log format inside the real-time database module (110).

11. A system (100) according to any one of the preceding claims, wherein the process control and management module (105) comprises:
- a first configuration component (105');
- a second component (105") for managing parallel processes run by the system (100).

12. A system (100) according to any one of the preceding claims, further comprises a robotics integration module (111) operatively associated with the process control and management module (105), the process control and management module (105) being configured to directly interface, by means of the robotics integration module (111), automatic or semi-automatic robotic sub-devices forming part of said at least one process control component (101) which the environment (A) is provided with.

13. A system (100) according to any one of the preceding claims, wherein each module of the system (100) is an executable software module residing in a respective server which is remote with respect to the system (100), or a local computer integrated in the system (100), which provides a plurality of dedicated microprocessors.

14. A method (400) for controlling and managing a process within an environment (A), the environment (A) comprising a plurality of components (101) for monitoring a scene of the environment (A), the method (400) comprising steps of:
- receiving (401), by a data communication interface module (102) of a system (100) for controlling and managing a process within an environment (A), operatively connected to the plurality of components (101) for monitoring a scene of the environment (A), a piece of information (I) representative of a scene of an environment (A) provided by one of the monitoring components of the plurality of components for monitoring (101) a scene of the environment (A),
- extrapolating (402) in real time, by an object classification and recognition module (103) which the system (100) is provided with, by means of the running of one or more trained neural networks (104), operatively connected to the data communication interface module (102), a plurality of attributes representative of an object detected within the scene of the environment (A) by the information (I) representative of the scene of the environment (A) provided by one of the monitoring components of the plurality of components for monitoring (101) a scene of the environment (A), the plurality of attributes representative of an object comprising data of the object which may be used by the system (100) for recognizing and classifying the object itself;
- generating (403), by a mapping and localizing module (107) of the plurality of components for monitoring (101) a scene of the environment (A) which the system (100) is provided with, operatively connected to the object classification and recognition module (103), on the basis of the plurality of attributes representative of an object within a scene of the environment (A) extrapolated for the object recognized and classified by the object recognition and classification module (103), geographical coordinates representative of the absolute position of the object, the step of generating (403) geographical coordinates representative of the absolute position of the object comprising a step of performing, by the mapping and localizing module (107), a geographic transformation or reprojection operation in which an attribute representative of a relative localization of the object within the piece of information (I) representative of a scene of the environment (A) is transformed or re-projected into geographical coordinates representative of an absolute position of the object;
- determining (404), by a process control and management module (105) which the system (100) is provided with, operatively connected to the object recognition and classification module (103), a process control command (CS), by combining the geographical coordinates representative of the absolute position of the object detected within the scene of the environment (A) extrapolated for the object recognized and classified by the object recognition and classification module (103) with set process control rules;
- providing (405), by the process control module (105), the determined process control command (CS) to at least one process control component (101') which the environment (A) is provided with.

## Patentansprüche

1. System (100) zur Steuerung und Verwaltung eines Prozesses in einer Umgebung (A), wobei die Umgebung (A) eine Mehrzahl von Komponenten (101) zum Überwachen einer Szene der Umgebung umfasst, wobei jede Komponente der Mehrzahl (101) dazu eingerichtet ist, eine Information (I) bereitzustellen, die eine Szene der Umgebung (A) repräsentiert, wobei das System (100) umfasst:
- ein Datenkommunikationsschnittstellenmodul (102), das betriebsbereit mit der Mehrzahl von Komponenten (101) zum Überwachen einer Szene der Umgebung (A) verbunden ist;
- ein Objekt-Klassifikations- und Erkennungs-Modul (103), das, basierend auf einem oder mehreren trainierten neuronalen Netzwerken (104), betriebsbereit mit dem Datenkommunikationsschnittstellenmodul (102) verbunden ist, wobei das Objekt-Klassifikations- und Erkennungs-Modul (103) dazu eingerichtet ist, in Echtzeit, mittels der Ausführung von einem oder mehreren trainierten neuronalen Netzwerken (104), aus einer Information (I), die eine Szene der Umgebung (A) repräsentiert, die von einer der Überwachungskomponenten der Mehrzahl von Komponenten zum Überwachen (101) einer Szene der Umgebung (A) bereitgestellt ist, eine Mehrzahl von Attributen, die ein Objekt repräsentieren, das in der Szene der Umgebung (A) erfasst ist, zu extrapolieren, wobei die Mehrzahl von Attributen, die ein Objekt repräsentieren, Daten des Objekts umfasst, die in dem System (100) zur Erkennung und Klassifizierung des Objekts selbst verwendet werden können;
- ein Objektabbildungs- und lokalisierungsmodul (107), das betriebsbereit mit dem Objekt-Klassifikations- und Erkennungs-Modul (103) verbunden ist, wobei das Abbildungs- und Lokalisierungsmodul (107) dazu eingerichtet ist, auf der Basis der Mehrzahl von Attributen, die ein Objekt in einer Szene der Umgebung (A) repräsentiert, die für das von dem Objekt-Klassifikations- und Erkennungs-Modul (103) erkannte und klassifizierte Objekt extrapoliert sind, geographische Koordinaten zu erzeugen, die die absolute Position des Objekts repräsentieren, wobei das Abbildungs- und Lokalisierungsmodul (107) dazu eingerichtet ist, eine geographische Transformations- oder Reprojektionsoperation durchzuführen, bei der ein Attribut, das eine relative Lokalisierung des Objekts in der Information (I) repräsentiert, die eine Szene der Umgebung (A) repräsentiert, in geographische Koordinaten transformiert oder reprojiziert wird, die eine absolute Position des Objekts repräsentieren;
- ein Prozess-Steuerungs- und Verwaltungs-Modul (105), das betriebsbereit mit dem Objekt-Klassifikations- und Erkennungs-Modul (103) verbunden ist, wobei das Prozess-Steuerungs- und Verwaltungs-Modul (105) dazu eingerichtet ist, einen Prozesssteuerungsbefehl (CS) durch Kombinieren der geographischen Koordinaten, die die absolute Position des Objekts, das in der Szene der Umgebung (A) erfasst ist, mit gesetzten Prozesssteuerungsregeln zu bestimmen, wobei das Prozess-Steuerungs- und Verwaltungs-Modul (105) dazu eingerichtet ist, den bestimmten Prozesssteuerungsbefehl (CS) wenigstens einer Prozesssteuerungskomponente (101 `) bereitzustellen, mit der die Umgebung (A) bereitgestellt ist.

2. System (100) nach einem der vorangehenden Ansprüche, wobei das Objekt-Klassifikations- und Erkennungs-Modul (103) ein erstes Training-sSubmodul (103') eines trainierten neuronalen Netzwerks umfasst, das dazu eingerichtet ist, neue Objekte und/oder Klassen von Objekten zu klassifizieren und erkennen.

3. System (100) nach Anspruch 2, wobei das Objekt-Klassifikations- und Erkennungs-Modul (103) ein zweites Inferenzsubmodul (104') umfasst, das dazu eingerichtet ist, das eine oder die mehreren neuronalen Netzwerke (104) auszuführen, wobei das zweite Inferenzsubmodul (104'), das das eine oder die mehreren neuronalen Netzwerke (104) ausführt, dazu eingerichtet ist, in Echtzeit, auf der Basis der Informationen (I), die eine Szene der Umgebung (A) repräsentieren, die von einer der Überwachungskomponenten der Mehrzahl von Komponenten zum Überwachen (101) einer Szene der Umgebung (A) bereitgestellt ist, die Mehrzahl von Attributen zu extrapolieren, die ein Objekt repräsentieren, das in der Szene der Umgebung (A) erfasst ist.

4. System (100) nach einem der vorangehenden Ansprüche, wobei die Kombination der geographischen Koordinaten, die die absolute Position des Objekts repräsentieren, das in der Szene der Umgebung (A) erfasst ist, die für das von dem Objekt-Klassifikations- und Erkennungs-Modul (103) mit den gesetzten Prozesssteuerungsregeln erfasste und erkannte Objekt extrapoliert ist, mittels der Ausführung von einem oder mehreren trainierten neuronalen Netzwerken (106), mit der das Prozess-Steuerungs- und Verwaltungs-Modul (105) versehen ist und in denen die festgesetzten Steuerungsregeln vorhanden sind, durch das Prozess-Steuerungs- und Verwaltungs-Modul (105) ausgeführt wird.

5. System (100) nach einem der vorangehenden Ansprüche, ferner umfassend ein Virtuelle-Assistenz-Modul (108), das betriebsbereit mit dem Prozess-Steuerungs- und Verwaltungs-Modul (105) verbunden ist, das dazu eingerichtet ist, automatische Abschreckungs- und Informationsvorrichtungen basierend auf einer Sprachsynthese zu aktivieren, die in der Mehrzahl von Komponenten für die Betätigung (101') der Sicherheitssteuerungsbefehle umfasst sind.

6. System (100) nach einem der vorangehenden Ansprüche, ferner umfassend ein zweites Schnittstellenmodul (109), das betriebsbereit mit dem Prozess-Steuerungs- und Verwaltungs-Modul (105) verbunden ist, wobei das zweite Schnittstellenmodul (109) dazu eingerichtet ist, die Prozessteuerungsbefehle (CS) in der Szene der Umgebung (A), die von dem Prozess-Steuerungs- und Verwaltungs-Modul (105) bereitgestellt ist, in ein Format, das mit dem Technologieformat des Internets der Dinge, loT, kompatibel ist, umzuwandeln.

7. System (100) nach Anspruch 6, ferner umfassend ein Echtzeit-Datenbank-Modul (110), das betriebsbereit mit dem Objekt-Klassifikations- und Erkennungs-Modul (103), mit dem Prozess-Steuerungs- und Verwaltungs-Modul (105) und mit dem zweiten Schnittstellenmodul (109) verbunden ist, wobei das Echtzeit-Datenbank-Modul (110) dazu eingerichtet ist, in Echtzeit die Daten, die von dem Objekt-Klassifikations- und Erkennungs-Modul (103), von dem Prozess-Steuerungs- und Verwaltungs-Modul (105) und von dem zweiten Schnittstellenmodul (109) erzeugt sind, zu speichern.

8. System (100) nach einem der vorangehenden Ansprüche, wobei das Prozess-Steuerungs- und Verwaltungs-Modul (105) ein Prozess-Steuerungs-Submodul (106) umfasst, in dem die gesetzten Prozesssteuerungsregeln angesiedelt sind, wobei das Prozess-Steuerungs-Submodul (106) ein trainiertes neuronales Netzwerk oder eine Programmierlogik ist.

9. System (100) nach einem der vorangehenden Ansprüche, wobei das Prozess-Steuerungs- und Verwaltungs-Modul (105) dazu eingerichtet ist, ein Objekt auf der Basis der Informationen (I), die eine Szene eines Objekts repräsentieren oder auf der Basis der Information (I), die eine Szene einer Umgebung repräsentiert, als Daten zu identifizieren, die die IoT-Technologie-Vorrichtung repräsentieren, und die eine IoT-Technologie-Vorrichtung in einem vorkonfigurierten Format senden kann, basierend auf dem Empfang solcher Daten, die eine IoT-Technologie-Vorrichtung repräsentieren, wobei das Prozess-Steuerungs- und Verwaltungs-Modul (105) dazu eingerichtet ist, das Objekt als kooperativ zu identifizieren; wobei, wenn dies nicht der Fall ist, in der Abwesenheit von Daten, die eine IoT-Technologie-Vorrichtung repräsentieren, das Prozess-Steuerungs- und Verwaltungs-Modul (105) dazu eingerichtet ist, das Objekt als nichtkooperativ zu identifizieren

10. System (100) nach einem der vorangehenden Ansprüche von 7 bis 9, wobei das Prozess-Steuerungs- und Verwaltungs-Modul (105) dazu eingerichtet ist, die Daten zu speichern, die in Logformat innerhalb des Echtzeit-Datenbank-Moduls (110) verarbeitet werden.

11. System (100) nach einem der vorangehenden Ansprüche, wobei das Prozess-Steuerungs- und Verwaltungs-Modul (105), umfasst:
- eine erste Konfigurationskomponente (105');
- eine zweite Komponente (105") zum Verwalten von parallelen Prozessen, die durch das System (100) ausgeführt werden.

12. System (100) nach einem der vorangehenden Ansprüche, ferner umfassend ein Robotik-Integrations-Modul (111), das betriebsbereit dem Prozess-Steuerungs- und Verwaltungs-Modul (105) zugeordnet ist, wobei das Prozess-Steuerungs- und Verwaltungs-Modul (105) dazu eingerichtet ist, mittels des Robotik-Integrations-Moduls (111), direkt automatische oder halbautomatische Robotik-Subvorrichtungen anzubinden, die Teil der wenigstens einen Prozesssteuerungskomponente (101) sind, mit der die Umgebung (A) bereitgestellt ist.

13. System (100) nach einem der vorangehenden Ansprüche, wobei jedes Modul des Systems (100) ein ausführbares Softwaremodul ist, das in einem entsprechenden Server angesiedelt ist, der abseits mit Bezug zu dem System (100) ist, oder ein lokaler Computer ist, der in dem System (100) integriert ist, das eine Mehrzahl von dedizierten Mikroprozessoren bereitstellt.

14. Verfahren (400) zur Steuerung und Verwaltung eines Prozesses in einer Umgebung (A), wobei die Umgebung (A) eine Mehrzahl von Komponenten (101) zum Überwachen einer Szene der Umgebung umfasst, wobei das Verfahren (400) umfasst Schritte eines:
- Erhaltens (401), durch ein Datenkommunikationsschnittstellenmodul (102) eines Systems (100) zur Steuerung und Verwaltung eines Prozesses in einer Umgebung (A), das betriebsbereit mit der Mehrzahl von Komponenten (101) zum Überwachen einer Szene der Umgebung (A) verbunden ist, einer Information (I), die eine Szene der Umgebung (A) repräsentiert, die von einer der Überwachungskomponenten der Mehrzahl von Komponenten zum Überwachen (101) einer Szene der Umgebung (A) bereitgestellt wird,
- Extrapolierens (402) in Echtzeit, durch ein Objekt-Klassifikations- und Erkennungs-Modul (103), mit dem das System (100) bereitgestellt wird, mittels der Ausführung von einem oder mehreren trainierten neuronalen Netzwerken (104), das/die betriebsbereit mit dem Datenkommunikationsschnittstellenmodul (102) verbunden ist/sind, einer Mehrzahl von Attributen, die ein Objekt repräsentieren, das in der Szene der Umgebung (A) durch die Informationen (I) erfasst wird, die die Szene der Umgebung (A) repräsentieren, die von einer der Überwachungskomponenten der Mehrzahl von Komponenten zum Überwachen (101) einer Szene der Umgebung (A) bereitgestellt werden, wobei die Mehrzahl von Attributen, die ein Objekt repräsentieren, Daten des Objekts umfassen, die von dem System (100) zur Erkennung und Klassifizierung des Objekts selbst verwendet werden können;
- Erzeugens (403), durch ein Abbildungs- und Lokalisierungsmodul (107) der Mehrzahl von Komponenten zum Überwachen (101) einer Szene der Umgebung (A), mit dem das System (100) bereitgestellt wird, das betriebsbereit mit dem Objekt-Klassifikations- und Erkennungs-Modul (103) verbunden ist, auf der Basis der Mehrzahl von Attributen, die ein Objekt in einer Szene der Umgebung (A) repräsentieren, die für das Objekt extrapoliert werden, das von dem Objekt-Klassifikations- und Erkennungs-Modul (103) erkannt und klassifiziert wird, von geographischen Koordinaten, die die absolute Position des Objekts repräsentieren, wobei der Schritt des Erzeugens (403) von geographischen Koordinaten, die die absolute Position des Objekts repräsentieren, einen Schritt eines Durchführens, durch das Abbildungs- und Lokalisierungsmodul (107), einer geographischen Transformations- oder Reproduktionsoperation umfasst, bei der ein Attribut, das eine relative Lokalisierung des Objekts in der Information (I) repräsentiert, die eine Szene der Umgebung (A) repräsentiert, in geographische Koordinaten transformiert oder reprojiziert wird, die eine absolute Position des Objekts repräsentieren;
- Bestimmens (404), durch ein Prozess-Steuerungs- und Verwaltungs-Modul (105), mit dem das System (100) bereitgestellt wird, das betriebsbereit mit dem Objekt-Klassifikations- und Erkennungs-Modul (103) verbunden ist, eines Prozesssteuerungsbefehls (CS), durch Kombinieren der geographischen Koordinaten, die die absolute Position des Objekts repräsentieren, das in der Szene der Umgebung (A) erfasst wird, die von dem Objekt-Klassifikations- und Erkennungs-Modul (103) erkannt und klassifiziert wird, extrapoliert werden, mit gesetzten Prozessteuerungsregeln;
- Bereitstellens (405), durch das Prozess-Steuerungs- und Verwaltungs-Modul (105), von dem Prozesssteuerungsbefehl (CS) an wenigstens eine Prozesssteuerungskomponente (101'), mit der die Umgebung (A) bereitgestellt wird.

## Revendications

1. Système (100) pour commander et gérer un processus dans un environnement (A), l'environnement (A) comprenant une pluralité de composants (101) pour surveiller une scène de l'environnement, chaque composant de ladite pluralité (101) étant configuré pour fournir une information (I) représentative d'une scène de l'environnement (A), le système (100) comprenant :
- un module d'interface de communication de données (102) connecté de manière opérationnelle à la pluralité de composants (101) pour surveiller une scène de l'environnement (A) ;
- un module de classification et de reconnaissance d'objets (103), basé sur un ou plusieurs réseaux neuronaux entraînés (104), connecté de manière opérationnelle au module d'interface de communication de données (102), ledit module de reconnaissance et de classification d'objets (103) étant configuré pour extrapoler en temps réel, au moyen de l'exécution d'un ou plusieurs réseaux neuronaux entraînés (104), à partir d'une information (I) représentative d'une scène de l'environnement (A) fournie par l'un des composants de surveillance de la pluralité de composants (101) pour surveiller une scène de l'environnement (A), une pluralité d'attributs représentatifs d'un objet détecté dans la scène de l'environnement (A), la pluralité d'attributs représentatifs d'un objet comprenant des données de l'objet qui peuvent être utilisées par le système (100) pour reconnaître et classifier l'objet lui-même ;
- un module de cartographie et de localisation (107) d'objets, connecté de manière opérationnelle au module de classification et de reconnaissance d'objets (103), ledit module de cartographie et de localisation (107) étant configuré pour générer, sur la base de la pluralité d'attributs représentatifs d'un objet dans une scène de l'environnement (A) extrapolée pour l'objet reconnu et classifié par le module de reconnaissance et de classification d'objets (103), des coordonnées géographiques représentatives de la position absolue de l'objet, le module de cartographie et de localisation (107) étant configuré pour effectuer une opération de transformation ou de reprojection géographique dans laquelle un attribut représentatif d'une localisation relative de l'objet dans l'information (I) représentative d'une scène de l'environnement (A) est transformé ou reprojeté en coordonnées géographiques représentatives d'une position absolue de l'objet ;
- un module de commande et de gestion de processus (105), connecté de manière opérationnelle au module de reconnaissance et de classification d'objets (103), ledit module de commande et de gestion de processus (105) étant configuré pour déterminer une instruction de commande de processus (CS), en combinant les coordonnées géographiques représentatives de la position absolue de l'objet détecté dans la scène de l'environnement (A) avec des règles de commande de processus établies, le module de commande et de gestion de processus (105) étant configuré pour fournir l'instruction de commande de processus (CS) déterminée à au moins un composant de commande de processus (101') dont l'environnement (A) est pourvu.

2. Système (100) selon la revendication précédente, dans lequel le module de classification et de reconnaissance d'objets (103) comprend un premier sous-module d'entraînement (103') d'un réseau neuronal entraîné configuré pour classifier et reconnaître de nouveaux objets et/ou classes d'objets.

3. Système (100) selon la revendication 2, dans lequel le module de classification et de reconnaissance d'objets (103) comprend un deuxième sous-module d'inférence (104') configuré pour exécuter lesdits un ou plusieurs réseaux neuronaux entraînés (104), le deuxième sous-module d'inférence (104') exécutant lesdits un ou plusieurs réseaux neuronaux entraînés étant configuré pour extrapoler en temps réel, sur la base de l'information (I) représentative d'une scène de l'environnement (A) fournie par l'un des composants de surveillance de la pluralité de composants (101) pour surveiller une scène de l'environnement (A), la pluralité d'attributs représentatifs d'un objet détecté dans la scène de l'environnement (A).

4. Système (100) selon l'une quelconque des revendications précédentes, dans lequel la combinaison des coordonnées géographiques représentatives de la position absolue de l'objet détecté dans la scène de l'environnement (A) extrapolée pour l'objet reconnu et classifié par le module de reconnaissance et de classification d'objets (103) avec les règles de commande de processus établies, est exécutée par le module de commande processus (105) au moyen de l'exécution d'un ou plusieurs réseaux neuronaux entraînés (106) dont le module de commande et de gestion de processus (105) est pourvu et où les règles de commande établies sont présentes.

5. Système (100) selon l'une quelconque des revendications précédentes, comprenant en outre un module d'assistance virtuelle (108) connecté de manière opérationnelle au module de commande et de gestion de processus (105), configuré pour activer des dispositifs de dissuasion et d'information automatiques basés sur la synthèse vocale compris dans la pluralité de composants (101') pour l'actionnement d'instructions de commande de sécurité.

6. Système (100) selon l'une quelconque des revendications précédentes, comprenant en outre un deuxième module d'interface (109) connecté de manière opérationnelle au module de commande et de gestion de processus (105), le deuxième module d'interface (109) étant configuré pour convertir les instructions de commande de processus (CS) dans la scène de l'environnement (A) fournie par le module de commande et de gestion de processus (105) en un format compatible avec le format technologique de l'Internet des objets, IoT.

7. Système (100) selon la revendication 6, comprenant en outre un module de base de données en temps réel (110) connecté de manière opérationnelle au module de classification et de reconnaissance d'objets (103), au module de commande et de gestion de processus (105) et au deuxième module d'interface (109), le module de base de données en temps réel (110) étant configuré pour stocker en temps réel les données générées par le module de classification et de reconnaissance d'objets (103), par le module de commande et de gestion de processus (105) et par le deuxième module d'interface (109).

8. Système (100) selon l'une quelconque des revendications précédentes, dans lequel le module de commande et de gestion de processus (105) comprend un sous-module de commande des processus (106) où résident les règles de commande de processus établies, le sous-module de commande des processus (106) étant un réseau neuronal entraîné ou une logique de programmation.

9. Système (100) selon l'une quelconque des revendications précédentes, dans lequel le module de commande et de gestion de processus (105) est configuré pour identifier un objet sur la base de l'information (I) représentative d'une scène d'un objet ou sur la base d'une information (I) représentative d'une scène d'un environnement en tant que données représentatives d'un dispositif technologique IoT que le dispositif technologique IoT peut envoyer dans un format préconfiguré, sur la base de la réception de telles données représentatives d'un dispositif technologique IoT, le module de commande et de gestion de processus (105) étant configuré pour identifier l'objet comme étant collaboratif ; si ce n'est pas le cas, en l'absence de données représentatives d'un dispositif technologique IoT, le module de commande et de gestion de processus (105) est configuré pour identifier l'objet comme n'étant pas collaboratif.

10. Système (100) selon l'une quelconque des revendications précédentes de 7 à 9, dans lequel le module de commande et de gestion de processus (105) est configuré pour stocker les données traitées sous forme de journal dans le module de base de données en temps réel (110).

11. Système (100) selon l'une quelconque des revendications précédentes, dans lequel le module de commande et de gestion de processus (105) comprend :
- un premier composant (105') de configuration ;
- un deuxième composant (105") pour gérer des processus parallèles exécutés par le système (100).

12. Système (100) selon l'une quelconque des revendications précédentes, comprenant en outre un module d'intégration robotique (111) associé de manière opérationnelle au module de commande et de gestion de processus (105), le module de commande et de gestion de processus (105) étant configuré pour interfacer directement, au moyen du module d'intégration robotique (111), des sous-dispositifs robotiques automatiques ou semi-automatiques faisant partie dudit au moins un composant de commande de processus (101) dont l'environnement (A) est pourvu.

13. Système (100) selon l'une quelconque des revendications précédentes, dans lequel chaque module du système (100) est un module logiciel exécutable résidant dans un serveur respectif qui est distant par rapport au système (100), ou un ordinateur local intégré dans le système (100) qui fournit une pluralité de microprocesseurs dédiés.

14. Procédé (400) pour commander et gérer un processus dans un environnement (A), l'environnement (A) comprenant une pluralité de composants (101) pour surveiller une scène de l'environnement (A), le procédé (400) comprenant les étapes consistant à :
- recevoir (401), par un module d'interface de communication de données (102) d'un système (100) pour commander et gérer un processus dans un environnement (A), connecté de manière opérationnelle à la pluralité de composants (101) pour surveiller une scène de l'environnement (A), une information (I) représentative d'une scène d'un environnement (A) fournie par l'un des composants de surveillance de la pluralité de composants (101) pour surveiller une scène de l'environnement (A),
- extrapoler (402) en temps réel, par un module de classification et de reconnaissance d'objets (103) dont le système (100) est pourvu, au moyen de l'exécution d'un ou plusieurs réseaux neuronaux entraînés (104) connectés de manière opérationnelle au module d'interface de communication de données (102), une pluralité d'attributs représentatifs d'un objet détecté dans la scène de l'environnement (A) par l'information (I) représentative de la scène de l'environnement (A) fournie par l'un des composants de surveillance de la pluralité de composants (101) pour surveiller une scène de l'environnement (A), la pluralité d'attributs représentatifs d'un objet comprenant des données de l'objet qui peuvent être utilisées par le système (100) pour reconnaître et classifier l'objet lui-même ;
- générer (403), par un module de cartographie et de localisation (107) de la pluralité de composants (101) pour surveiller une scène de l'environnement (A) dont le système (100) est pourvu, connecté de manière opérationnelle au module de classification et de reconnaissance d'objets (103), sur la base de la pluralité d'attributs représentatifs d'un objet dans une scène de l'environnement (A) extrapolée pour l'objet reconnu et classifié par le module de reconnaissance et de classification d'objets (103), des coordonnées géographiques représentatives de la position absolue de l'objet, l'étape de génération (403) des coordonnées géographiques représentatives de la position absolue de l'objet comprenant une étape consistant à effectuer, par le module de cartographie et de localisation (107), une opération de transformation ou de reprojection géographique dans laquelle un attribut représentatif d'une localisation relative de l'objet dans l'information (I) représentative d'une scène de l'environnement (A) est transformé ou reprojeté en coordonnées géographiques représentatives d'une position absolue de l'objet ;
- déterminer (404), par un module de commande et de gestion de processus (105) dont le système (100) est pourvu, connecté de manière opérationnelle au module de reconnaissance et de classification d'objets (103), une instruction de commande de processus (CS), en combinant les coordonnées géographiques représentatives de la position absolue de l'objet détecté dans la scène de l'environnement (A) extrapolée pour l'objet reconnu et classifié par le module de reconnaissance et de classification d'objets (103) avec des règles de commande de processus établies ;
- fournir (405), par le module de commande processus (105), l'instruction de commande de processus (CS) déterminée à au moins un composant de commande de processus (101') dont l'environnement (A) est pourvu.
